# EUROPEAN PATENT APPLICATION

(11) **EP 4 542 267 A1**
(43) Date of publication of application: **23.04.2025**
(21) Application number: 23823900.8
(22) Date of filing: 12.06.2023
(51) Int. Cl.: G02B 1/14, B32B 7/023, B32B 27/00, B32B 27/18, B32B 27/20, C09D 5/00, C09D 7/61, C09D 183/04, C09D 201/00, G02B 1/11, G02C 7/02

(54) **SPECTACLE LENS**

(30) Priority: 15.06.2022 JP 2022096386
(71) Applicant: Nikon-Essilor Co., Ltd., Tokyo 130-0026 (JP)
(72) Inventor: IGAMI Yuka, Tokyo 130-0026 (JP)
(74) Representative: Hoffmann Eitle
(86) International application number: PCT/JP2023/021765
(87) International publication number: WO 2023/243610

(57) **Abstract**

The present invention provides a spectacle lens excellent in cracking suppression properties and scratch resistance. There is provided a spectacle lens comprising a spectacle lens base, a primer layer, and a hard coat layer in this order, wherein the hard coat layer is composed of a plurality of resin layers formed by applying compositions in a multilayer manner, each of the compositions contains an organic compound X selected from the group consisting of a polymerizable compound and a polymer thereof, an inorganic compound Y selected from the group consisting of inorganic oxide particles and silsesquioxane, and a polymerization initiator, when the compositions contain the polymer, at least a part of the polymer and at least a part of the inorganic compound Y may be bonded together, and Requirement 1 and Requirement 2 are satisfied.

## Description

### TECHNICAL FIELD

The present disclosure relates to a spectacle lens.

### BACKGROUND ART

Patent Literature 1 discloses a hard coat layer formed by curing a composition including inorganic oxide particles, an organic silicon compound, and other components.

### CITATION LIST

### PATENT LITERATURE

Patent Literature 1: WO 2015/163465

### SUMMARY OF INVENTION

The present disclosure relates to a spectacle lens comprising a spectacle lens base, a primer layer, and a hard coat layer in this order, wherein the hard coat layer is composed of a plurality of resin layers formed by applying compositions in a multilayer manner, each of the compositions contains an organic compound X selected from the group consisting of a polymerizable compound and a polymer thereof, an inorganic compound Y selected from the group consisting of inorganic oxide particles and silsesquioxane, and a polymerization initiator, and when the compositions contain the polymer, at least a part of the polymer and at least a part of the inorganic compound Y may be bonded together, and Requirement 1 and Requirement 2 are satisfied.

### BRIEF DESCRIPTION OF DRAWINGS

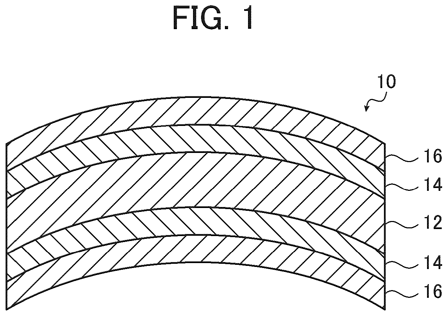

[FIG. 1] FIG. 1 is an example showing a cross section of a spectacle lens.

### DESCRIPTION OF EMBODIMENTS

A spectacle lens of the present disclosure is described below in detail.

The spectacle lens of the present disclosure is excellent in cracking suppression properties and scratch resistance.

In the description, the term "to" means that numerical values given before and after "to" are included in the range as the lower and upper limits thereof.

In the description, a halogen atom may be, for instance, a fluorine atom, a chlorine atom, a bromine atom, or an iodine atom.

In the description, halogenation may be, for instance, fluorination, chlorination, bromination, or iodination.

In the description, the term "(meth)acryl" is a concept covering both "acryl" and "methacryl", and the term "(meth)acryloyl group" is a concept covering both an acryloyl group and a methacryloyl group.

The term "solid(s)" in the description refers to components other than a solvent, and even when a component takes on a liquid form at ordinary temperature and atmospheric pressure (25°C and 101.3 kPa), the component is calculated as a solid. A solid may be a component that chemically changes in the process of curing treatment.

However, when a composition and a mixture for living polymerization, which will be described later, contain a specific compound selected from the group consisting of surfactants that take on a liquid form at ordinary temperature and atmospheric pressure, living polymerization catalysts that take on a liquid form at ordinary temperature and atmospheric pressure, and promoters that take on a liquid form at ordinary temperature and atmospheric pressure, the specific compound is not included in solids of the composition and the mixture for living polymerization, which will be described later. For instance, in a composition composed of an organic compound X, an inorganic compound Y, a polymerization initiator, and a surfactant that takes on a liquid form at ordinary temperature and atmospheric pressure, the total amount of the organic compound X, the inorganic compound Y, and the polymerization initiator corresponds to solids of the composition, while the amount of the surfactant that takes on a liquid form at ordinary temperature and atmospheric pressure is not included in solids of the composition.

### [Spectacle lens]

A spectacle lens includes a spectacle lens base, a primer layer, and a hard coat layer in this order.

FIG. 1 is a cross-sectional view of a spectacle lens of one embodiment. A spectacle lens 10 shown in FIG. 1 includes primer layers 14 separately disposed on a spectacle lens base 12 on the opposite sides of the spectacle lens base 12, and hard coat layers 16 separately disposed on the primer layers 14.

The primer layer 14 and the hard coat layer 16 are disposed on each side of the spectacle lens base 12 in the spectacle lens 10 shown in FIG. 1 but may be disposed only on one side of the spectacle lens base 12.

Members that may be included in the spectacle lens are described below in detail.

### <Requirement 1>

The spectacle lens satisfies Requirement 1.

Requirement 1: a mass ratio A of a content of the inorganic compound Y to a content of the organic compound X (inorganic compound Y content/organic compound X content) varies among compositions used in formation of a plurality of resin layers and is 0.7 to 5.3, and
the mass ratios A of the compositions separately used in formation of respective resin layers constituting the plurality of resin layers are in a progressively increasing sequence from a primer layer side to a side opposite of the primer layer side.

Preferred embodiments in terms of the contents of the components are as described below.

The mass ratio A varies among the compositions used in formation of the plurality of resin layers and is 0.7 to 5.3.

The expression "the mass ratio A varies" means that the mass ratios A of the compositions used in formation of respective resin layers are not the same. In other words, the resin layers constituting the plurality of resin layers are formed using compositions having different mass ratios A.

When the resin layers are formed using the compositions from the primer layer side to the side opposite of the primer layer side, the mass ratio A of a composition used in formation of a resin layer closest to the primer layer (a resin layer adjacent to the primer layer) is preferably 0.7 to 2.0 and more preferably 0.7 to 1.0.

The mass ratio A of a composition used in formation of a resin layer farthest from the primer layer (when the spectacle lens has an antireflection layer, a resin layer adjacent to the antireflection layer) is preferably 4.0 to 10.0 and more preferably 4.0 to 5.3.

For example, when a spectacle lens includes a spectacle lens base, a primer layer, a resin layer 1 formed using a composition 1, a resin layer 2 formed using a composition 2, and a resin layer 3 formed using a composition 3 in this order, a composition used in formation of a resin layer closest to the primer layer refers to the composition 1, and a composition used in formation of a resin layer farthest from the primer layer refers to the composition 3.

The mass ratios A of the compositions separately used in formation of the respective resin layers constituting the plurality of resin layers are in a progressively increasing sequence from the primer layer side to the side opposite of the primer layer side.

This means that, for example, when a spectacle lens includes a spectacle lens base, a primer layer, a resin layer 1 formed using a composition 1, a resin layer 2 formed using a composition 2, and a resin layer 3 formed using a composition 3 in this order, the resin layer 1, the resin layer 2, and the resin layer 3 are formed from the primer layer side to the side opposite of the primer layer side, and the mass ratio A progressively increases in the order of the composition 1, the composition 2, and the composition 3.

To calculate the mass ratio A, when the amounts of the organic compound X and the inorganic compound Y used in formation of a composition are known, the mass ratio A may be calculated from the amounts of use thereof.

### <Requirement 2>

The spectacle lens satisfies Requirement 2.

Requirement 2: a polymerization initiator contains: a polymerization initiator V with a ratio of a molar absorption coefficient at a wavelength of 254 nm to a molar absorption coefficient at a wavelength of 365 nm (molar absorption coefficient at 254 nm wavelength/molar absorption coefficient at 365 nm wavelength) being not less than 50; and a polymerization initiator W with a ratio between those molar absorption coefficients being less than 30, and
a mass ratio B of a content of the polymerization initiator V to a content of the polymerization initiator W (polymerization initiator V content/polymerization initiator W content) is 0.2 to 0.8.

The polymerization initiator V is a polymerization initiator in which the ratio of a molar absorption coefficient (unit: (mol/L)⁻¹cm⁻¹) at a wavelength of 254 nm to a molar absorption coefficient (unit: (mol/L)⁻¹cm⁻¹) at a wavelength of 365 nm is not less than 50.

The ratio between the above molar absorption coefficients is not less than 50, preferably 100 to 500, and more preferably 120 to 300.

Examples of the polymerization initiator V include Ominirad 127 (manufactured by IGM Resins B.V.) and Ominirad 1173 (manufactured by IGM Resins B.V.).

The polymerization initiator W is a polymerization initiator in which the ratio of a molar absorption coefficient at a wavelength of 254 nm to a molar absorption coefficient at a wavelength of 365 nm is less than 30.

The ratio between the above molar absorption coefficients is less than 30, preferably 1.0 to 25, and more preferably 1.0 to 20.

Examples of the polymerization initiator W include Ominirad 819 (manufactured by IGM Resins B.V.) and Ominirad 369 (manufactured by IGM Resins B.V.).

The ratio between the molar absorption coefficients above can be calculated by, for instance, preparing a solution in which a relevant polymerization initiator is dissolved in a solvent (e.g., acetonitrile), analyzing the solution with a spectrophotometer (U-4100, manufactured by Hitachi, Ltd.) to measure molar absorption coefficients, and obtaining the ratio using those measurements.

The mass ratio B is 0.2 to 0.8.

The mass ratio B of a composition used in formation of a resin layer closest to the primer layer (a resin layer adjacent to the primer layer) is preferably 0.2 to 0.6 and more preferably 0.2 to 0.4.

The mass ratio B of a composition used in formation of a resin layer farthest from the primer layer (when the spectacle lens has an antireflection layer, a resin layer adjacent to the antireflection layer) is preferably 0.3 to 0.8 and more preferably 0.7 to 0.8.

Preferably, the mass ratios B of the compositions separately used in formation of the respective resin layers constituting the plurality of resin layers are in a progressively increasing sequence from the primer layer side to the side opposite of the primer layer side. For the progressive increase here, reference can be made to the foregoing description on the mass ratio A.

### <Spectacle lens base>

The spectacle lens includes the spectacle lens base.

The spectacle lens base is a member supporting the primer layer, the hard coat layer, and the like.

For the type of the spectacle lens base, an example is a spectacle lens base constituted of an organic material or an inorganic material, and a spectacle lens base constituted of an inorganic material (e.g., a glass base) is preferred.

Examples of the spectacle lens base include a finished lens that is obtained by optically finishing both the convex and concave surfaces and shaping the lens according to a desired power, a semi-finished lens whose convex surface is solely finished as an optical surface (e.g., a spherical surface, a rotationally symmetric aspheric surface, a progressive surface), and a lens obtained by processing and polishing the concave surface of a semi-finished lens according to the prescription of the wearer.

Exemplary organic materials (that is, resins) include (meth)acrylic resin, thiourethane resin, allyl resin, episulfide resin, polycarbonate resin, polyurethane resin, polyester resin, polystyrene resin, polyethersulfone resin, poly-4-methylpentene-1 resin, and diethylene glycol bis(allyl carbonate) resin (CR-39).

Exemplary inorganic materials include silicon, ceramics, and glass, with glass being preferred.

The thickness of the spectacle lens base may be 1 to 30 mm for the sake of handleability.

This thickness (average thickness) is determined by measuring the thickness at given five points and calculating the arithmetic mean of the measurements.

The spectacle lens base is preferably translucent and may be either transparent or non-transparent. In addition, the spectacle lens base may be colored.

### <Primer layer>

The spectacle lens includes the primer layer.

The primer layer is a layer that improves the adhesion of the hard coat layer to the spectacle lens base.

A material constituting the primer layer is resin, for example. Specific examples thereof include urethane resin, epoxy resin, phenol resin, polyimide resin, polyester resin, bismaleimide resin, and polyolefin resin.

The primer layer may have a thickness of 0.3 to 2 µm.

This thickness (average thickness) can be measured in the same manner as that for the spectacle lens base.

### <Hard coat layer>

The spectacle lens includes the hard coat layer.

The hard coat layer is a layer disposed on the primer layer and imparting scratch resistance to the spectacle lens base.

The hard coat layer is composed of a plurality of resin layers formed by applying compositions to be described later in a multilayer manner.

The number of resin layers constituting the hard coat layer is preferably not less than 2 and more preferably 3 to 5.

The thickness of the hard coat layer is preferably not less than 1 µm, more preferably not less than 5 µm, and even more preferably not less than 10 µm. The upper limit thereof is preferably not more than 30 µm. The thickness of the hard coat layer corresponds to the total thickness of the plurality of resin layers that the hard coat layer has.

The above thickness (average thickness) can be measured in the same manner as that for the spectacle lens base.

The resin layers constituting the plurality of resin layers that the hard coat layer has may be the same or different in thickness.

The hard coat layer preferably contains various components that may be contained in compositions to be described later, cured products thereof, and decomposition products thereof.

### (Compositions)

Each of the compositions contains the organic compound X, the inorganic compound Y, and the polymerization initiator.

The plurality of resin layers (hard coat layer) can be formed by applying the compositions in a multilayer manner.

In the case where a mixture obtained upon reaction of a mixture for living polymerization, which will be described layer, is used in preparation of a composition, a part or all of the organic compound X, the inorganic compound Y, and the polymerization initiator contained in the composition may be an unreacted part of the organic compound X, the inorganic compound Y, and the polymerization initiator contained in the reacted mixture.

### - Organic compound X -

Each of the compositions contains the organic compound X.

The organic compound X is an organic compound selected from the group consisting of polymerizable compounds and polymers thereof. In other words, the organic compound X may be a polymerizable compound or a polymer obtained by polymerizing a polymerizable compound.

The polymerizable compound is preferably a monomer or oligomer that has a polymerizable group.

The polymerizable group may be a radical polymerizable group or a cationic polymerizable group.

Examples of the radical polymerizable group include ethylenically unsaturated groups such as a (meth)acryloyl group, a vinyl group, and a styryl group, with a (meth)acryloyl group being preferred.

Examples of the cationically polymerizable group include alicyclic ether groups such as an epoxy group and an oxetanyl group, a cyclic acetal group, a cyclic lactone group, a cyclic thioether group, a spiro orthoester group, and a vinyloxy group, with an epoxy group or an oxetanyl group being preferred.

The polymerizable compound may be a monofunctional polymerizable compound or a polyfunctional polymerizable compound, with a polyfunctional polymerizable compound being preferred.

When a polyfunctional polymerizable compound is used, a branched structure and/or a network structure (crosslinked structure) can be introduced to the polymer to be obtained, and this leads to excellent scratch resistance.

The number of ethylenically unsaturated groups that the polymerizable compound has is preferably 1 or 2 and more preferably 2 to 5.

The polymerizable compound may have a functional group other than the polymerizable group. Examples of other functional groups include a urethane bond, a hydroxy group, and ethylenically unsaturated groups such as a vinyl group and a styryl group, with a urethane bond being preferred.

The polymerizable compound is preferably one or more selected from the group consisting of a compound represented by Formula (1) and a compound represented by Formula (2).

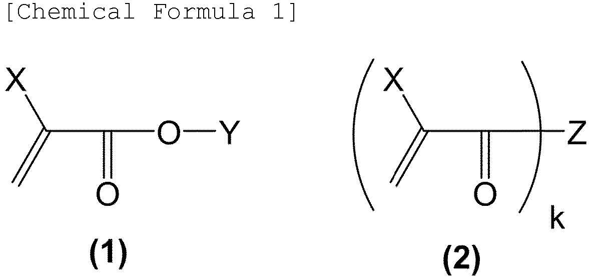

In Formula (1), X and Y each independently represent a hydrogen atom or a substituent.

The substituent represented by X is preferably an organic group and more preferably a methyl group.

The substituent represented by Y is preferably an organic group, more preferably an alkyl group that may have a substituent or a cycloalkyl group that may have a substituent, and even more preferably a cycloalkyl group that may have a substituent. Alternatively, the substituent represented by Y may be an organic group having a urethane group.

The alkyl group may be linear or branched. The number of carbon atoms in the alkyl group is preferably 1 to 10.

The cycloalkyl group may be monocyclic or polycyclic. The number of carbon atoms in the cycloalkyl group is preferably 3 to 12.

Note that Y is not a group having an ethylenically unsaturated group.

In Formula (2), k represents an integer of 2 or more. Z represents a k-valent linking group. When k is 2, Z may be a single bond. X represents a hydrogen atom or a substituent.

k is preferably an integer of 2 to 10, more preferably 2 or 3, and even more preferably 2.

The substituent represented by X is preferably an organic group and more preferably a methyl group. In Formula (2), a plurality of X's may be the same or different.

Z may be a k-valent organic group. The number of atoms other than a hydrogen atom in the k-valent linking group is preferably 1 to 500.

Examples of the k-valent linking group include: divalent linking groups such as an ether group (-O-), a carbonyl group (-CO-), an ester group (-COO-), a thioether group (-S-), a urethane group (-NHCOO-), -SO₂-, -NR^{N}- (R^{N} represents a hydrogen atom or a substituent), an alkylene group (having preferably 1 to 10 carbon atoms), an alkenylene group (having preferably 2 to 10 carbon atoms), and an alkynylene group (having preferably 2 to 10 carbon atoms); a trivalent linking group having a group represented by "-N<", and a trivalent linking group having a group represented by "-CR<" (where R represents a hydrogen atom or a substituent); a tetravalent linking group having a group represented by ">C<"; a k-valent linking group having a cyclic group such as an aromatic ring group or an alicyclic group; and groups that are combinations thereof.

A ring constituting the k-valent linking group having a cyclic group may have a heteroatom.

Examples of the aromatic ring group include a benzene ring, a naphthalene ring, and a bisphenol ring group such as a cyclic group formed by removing an arbitrary hydrogen atom from a bisphenol compound, e.g., bisphenol A.

Examples of the alicyclic group include cycloalkane ring groups such as a cyclohexane ring group, a cyclopentane ring group, and a tricyclodecane ring group, a dioxane ring group, and an isocyanuric ring group.

The alkylene group, the alkenylene group, the alkynylene group, and the cyclic group may further have a substituent.

The k-valent linking group may have one or more groups selected from the group consisting of an alkylene group, a (poly)oxyalkylene group, and a urethane bond.

In Z, an atom directly bonded to the "CH₂=CX-CO-" group, the number of which is k, may be an oxygen atom.

The polyfunctional polymerizable compound is preferably one or more selected from the group consisting of a compound represented by Formula (I) and a compound represented by Formula (II), and more preferably a compound represented by Formula (I).

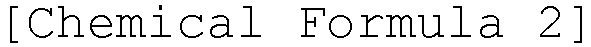

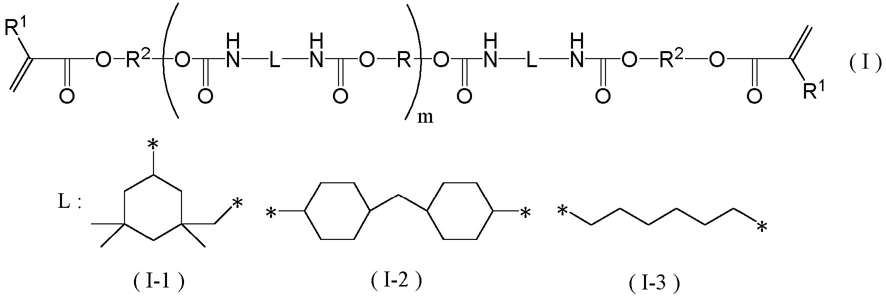

In Formula (I), m represents an integer of 0 to 9. R represents a bifunctional polyester polyol residue or a bifunctional polyether polyol residue. R¹ represents a hydrogen atom or a methyl group. R² represents an alkylene group having 2 to 4 carbon atoms. L represents a group represented by any of Formula (I-1) to Formula (I-3).

In Formula (I), R represents a bifunctional polyester polyol residue or a bifunctional polyether polyol residue.

The bifunctional polyester polyol residue is a group obtained by removing two hydroxy groups (OH) from polyester polyol having two hydroxyl groups. One example of the polyester polyol is polyester polyol obtained by dehydration condensation of adipic acid or phthalic acid and glycol having 2 to 6 carbon atoms.

The bifunctional polyether polyol residue is a group obtained by removing two hydroxy groups (OH) from polyether polyol having two hydroxyl groups. Examples of the polyether polyol include polyethylene glycol and polypropylene glycol.

In Formula (I), R² represents an alkylene group having 2 to 4 carbon atoms.

The alkylene group may be linear or branched.

L represents a group represented by any of Formula (I-1) to Formula (I-3).

In Formula (I-1) to Formula (I-3), * represents a bonding position.

When plural groups represented by the same symbol are present in Formula (I), the plural groups represented by the same symbol may be the same or different.

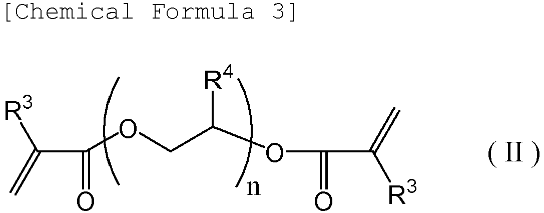

In Formula (II), n represents an integer of 0 to 9. R³ and R⁴ each independently represent a hydrogen atom or a methyl group.

When plural groups represented by the same symbol are present in Formula (II), the plural groups represented by the same symbol may be the same or different.

The polymer is not particularly limited as long as it is a polymer obtained by polymerizing the polymerizable compound by a known method. For the polymer, a polymer obtained by living radical polymerization is preferred.

One or more of the organic compounds X may be used alone or in combination.

The organic compound X content is preferably 20 to 90 mass% and more preferably 30 to 80 mass% with respect to the total solids of the composition.

### - Inorganic compound Y -

Each of the compositions contains the inorganic compound Y.

The inorganic compound Y is an inorganic compound selected from the group consisting of inorganic oxide particles and silsesquioxane.

Silsesquioxane is not included in the inorganic oxide particles.

The inorganic oxide particles may be metal oxide particles.

Examples of the inorganic oxide particles include particles of an oxide(s) of one or more metals selected from Ti, Zr, Si, Al, Sn, Sb, Ta, Ce, La, Fe, Zn, W and In and composite metal oxide particles thereof. The composite metal oxide particles refer to oxide particles containing two or more metals (atoms of two or more metals).

The inorganic oxide particles may contain one or more selected from the group consisting of SiO₂ (silicon oxide), Al₂O₃ (aluminum oxide), SnO₂ (tin oxide), ZrO₂ (zirconium oxide), and TiO₂ (titanium oxide), more preferably contain one or more selected from the group consisting of SiO₂ and ZrO₂, and even more preferably contain SiO₂.

For the inorganic oxide particles, commercial products may be used. Examples of commercial inorganic oxide particles include a sol in which inorganic oxide particles of one or more selected from the group consisting of SiO₂, Al₂O₃, SnO₂, ZrO₂, TiO₂, and composite oxide particles thereof are dispersed in water or an organic solvent.

Silsesquioxane is a silane compound having the basic structure represented by Formula (Q) as obtained through hydrolysis of a trifunctional silane compound such as alkoxysilane, chlorosilane, or silanol.

Examples of the structure of silsesquioxane include an irregular form such as a random structure, a ladder structure, a cage type (completely condensed cage type) structure, and an incomplete cage type structure (which is a partially cleaved structure of a cage type structure; e.g., a structure lacking a part of silicon atoms in a cage type structure, and a structure in which a silicon-oxygen bond is broken in a part of a cage type structure).

R^{Q}-SiO_{3/2} ... (Q)

In Formula (Q), R^{Q} represents a monovalent organic group.

Examples of silsesquioxane include SQ series (e.g., AC-SQ series and MAC-SQ series, manufactured by TOAGOSEI Co., Ltd.).

The inorganic compound Y may be surface-treated.

The surface treatment is not included in an embodiment in which at least a part of a polymer that is the organic compound X and at least a part of the inorganic compound Y are bonded together, which will be described later.

Examples of the surface treatment include introduction of various functional groups and a treatment using a known surface treatment agent.

Examples of surface-treated inorganic compound Y include an inorganic compound Y having a starting moiety on the surface thereof, which will be described later.

At least a part of the inorganic compound Y and at least a part of a polymer that is the organic compound X may be bonded together.

Examples of the bonding form include a covalent bond, a coordinate bond, an ion bond, a hydrogen bond, a van der Waals bond, and a metallic bond, with a covalent bond being preferred.

When a polymer that is the organic compound X is bonded to inorganic oxide particles, the polymer that is the organic compound X is preferably bonded to the surfaces of the inorganic oxide particles. In other words, in each of the compositions, a polymer that is the organic compound X may be bonded to inorganic oxide particles to form modified inorganic oxide particles containing the inorganic oxide particles and the polymer that is the organic compound X bonded to the surfaces of the inorganic oxide particles.

When a polymer that is the organic compound X is bonded to silsesquioxane, the polymer that is the organic compound X is preferably bonded to the surface of the silsesquioxane. In other words, in each of the compositions, a polymer that is the organic compound X may be bonded to silsesquioxane to form modified silsesquioxane containing the silsesquioxane and the polymer that is the organic compound X bonded to the surface of the silsesquioxane.

As described above, when a polymer and the inorganic compound Y are bonded together, they may be bonded via another organic compound. For instance, when bonded to a polymer that is the organic compound X, an inorganic compound Y having a starting moiety on the surface thereof may be bonded to the polymer that is the organic compound X via the starting moiety.

Hereinafter, the modified inorganic oxide particles and the modified silsesquioxane are also collectively referred to as "modified inorganic compound Y".

For the modified inorganic compound Y, use may be made of a modified inorganic compound Y produced in a separate process or a modified inorganic compound Y obtained by reacting the polymerizable compound and the inorganic compound Y in a composition.

It is preferable to obtain the modified inorganic compound Y by living radical polymerization. Polymerization by living radical polymerization allows the molecular weight distribution of the resulting polymer to be narrow and allows the modified inorganic compound Y to be evenly dispersed in a composition and a resin layer, so that the hardness of the hard coat layer tends to improve.

The average particle size of the inorganic compound Y is preferably 0.5 to 200 nm and more preferably 1 to 50 nm. Exemplary methods of measuring the average particle size include a method in which the sizes of given 100 particles of the inorganic compound Y are measured with a scanning electron microscope and the arithmetic mean of the measurements is calculated, and a method in which the measurement is carried out by dynamic light scattering under the following conditions:
Measurement apparatus: Zeta-potential and particle size analyzer ELS-Z2 (manufactured by Otsuka Electronics Co., Ltd.)
Measurement cell: Particle size cell unit (scattering angle: 165°)
Measurement temperature: 25°C
Method of particle size analysis: CONTIN method

In the measurement, the inorganic compound Y to be measured or a dispersion liquid containing the inorganic compound Y to be measured is optionally diluted with a dilution solvent. For the dilution solvent, methyl ethyl ketone (MEK) is used for example, and if the use of MEK causes a problem such as aggregation of the inorganic compound Y, another suitable dilution solvent is used.

In the present disclosure, the term "average particle size" refers to the average particle size on a volume distribution basis, unless otherwise noted.

One or more of the inorganic compounds Y may be used alone or in combination.

The inorganic compound Y content is preferably 10 to 60 mass% and more preferably 10 to 50 mass% with respect to the total solids of the composition.

### - Polymerization initiator -

Each of the compositions contains the polymerization initiator.

Examples of the polymerization initiator include the polymerization initiator V and the polymerization initiator W.

The polymerization initiator may include another polymerization initiator different from the polymerization initiator V and the polymerization initiator W as long as Requirement 2 is satisfied.

For the polymerization initiators W and V, one or more polymerization initiators may be used alone or in combination.

The polymerization initiator W content is preferably 0.1 to 3.0 mass% and more preferably 0.1 to 1.0 mass% with respect to the total solids of the composition.

The polymerization initiator V content is preferably 0.1 to 3.0 mass% and more preferably 0.1 to 1.0 mass% with respect to the total solids of the composition.

### - Sensitizer -

Each of the compositions may contain a sensitizer.

Examples of the sensitizer include ANTHRACURE series (manufactured by Kawasaki Kasei Chemicals Ltd.).

One or more of the sensitizers may be used alone or in combination.

When a composition contains the sensitizer, the sensitizer content is preferably 0.001 to 5 mass% and more preferably 0.05 to 2 mass% with respect to the total solids of the composition.

### - Surfactant -

Each of the compositions may contain a surfactant.

The surfactant may be, for instance, a silicone compound such as silicone oil, and specific examples thereof include DOWSIL series (manufactured by Dow).

One or more of the surfactants may be used alone or in combination.

When a composition contains the surfactant, the surfactant content is preferably 0.001 to 5 mass% and more preferably 0.01 to 0.5 mass% with respect to the total solids of the composition.

### - UV Absorber -

Each of the compositions may contain a UV absorber.

Examples of the UV absorber include a triazine compound and a benzotriazole compound.

Examples of the triazine compound and the benzotriazole compound include triazine compounds and benzotriazole compounds to be described later that may be contained in a mixture for living polymerization to be described later.

When the mixture for living polymerization is used in preparation of a composition, a triazine compound and a benzotriazole compound contained in the mixture for living polymerization may be used as the UV absorber in the composition.

One or more of the UV absorbers may be used alone or in combination.

When a composition contains the UV absorber, the UV absorber content is preferably 0.01 to 5 mass% and more preferably 0.1 to 3 mass% with respect to the total solids of the composition.

### - Solvent -

Each of the compositions may contain a solvent.

Examples of the solvent include water and an organic solvent.

Examples of the organic solvent include an alcoholic solvent, a ketone solvent, an ether solvent, an ester solvent, a hydrocarbon solvent, a halogenated hydrocarbon solvent, an amide solvent, a sulfone solvent, and a sulfoxide solvent.

One or more of the solvents may be used alone or in combination.

When a composition contains the solvent, the solvent content is preferably 10 to 90 mass% and more preferably 20 to 60 mass% with respect to the total mass of the composition.

### - Other components -

Each of the compositions may contain various components that may be contained in the mixture for living polymerization to be described later, reaction products thereof, and decomposition products thereof.

Each of the compositions may optionally contain additives such as an antiaging agent, a coating adjusting agent, a light stabilizer, an antioxidant, a discoloration preventing agent, a dye, a filler, and an internal mold release agent, in addition to the above-described various components.

### <Antireflection layer>

The spectacle lens may include an antireflection layer.

The spectacle lens may have the antireflection layer on the hard coat layer. In other words, the spectacle lens may have the spectacle lens base, the primer layer, the hard coat layer, and the antireflection layer in this order.

The antireflection layer may have a single layer structure or a multilayer structure.

For the antireflection layer, an inorganic antireflection layer is preferred. The inorganic antireflection layer refers to an antireflection layer constituted of an inorganic compound.

The antireflection layer with multilayer structure may have the structure in which a low refractive index layer(s) and a high refractive index layer(s) are alternately stacked.

Exemplary materials constituting the high refractive index layer include oxides of titanium, zircon, aluminum, niobium, tantalum, and lanthanum. Exemplary materials constituting the low refractive index layer include silica oxide.

Exemplary methods of forming the antireflection layer include dry methods such as vacuum evaporation, sputtering, ion plating, ion-beam assisted deposition, and CVD.

### [Method of manufacturing spectacle lens]

The method of manufacturing the spectacle lens is not particularly limited and may be a known method.

The method of manufacturing the spectacle lens may be a method in which respective layers are formed by sequentially applying a primer layer-forming composition or the compositions.

One example of the method of manufacturing the spectacle lens is a method including the step of forming the primer layer by applying the primer layer-forming composition and the step of forming the hard coat layer by applying the compositions in a multilayer manner on the primer layer.

The formation of a coating may optionally be followed by drying treatment such as heating treatment to remove a solvent from the coating, and then curing treatment to cure the coating.

The primer layer-forming composition preferably contains the above-described components that the primer layer may have, and a solvent. The compositions are as described above.

Examples of the method of applying the primer layer-forming composition or the compositions include dip coating, spin coating, spray coating, ink jet coating, and flow coating.

When dip coating is employed for instance, the spectacle lens base is immersed in the primer layer-forming composition or the relevant one of the compositions and then pulled out and dried, whereby a coating with a predetermined thickness can be formed on the spectacle lens base.

The thickness of a coating formed on the spectacle lens base is suitably adjustable.

The application in a multilayer manner in the step of forming the hard coat layer may be simultaneous multilayer application or successive multilayer application.

In the case of successive multilayer application, preferably, all the compositions are applied and then subjected to curing treatment to be described later. In the case where, for instance, the respective resin layers are formed using the compositions, it is preferable to first apply the compositions to form respective coatings and then perform curing treatment.

The curing treatment may be light irradiation treatment.

For the conditions for the light irradiation treatment, conditions suitable for the type of the polymerization initiator can be selected.

Exemplary types of light for light irradiation include a UV ray and a visible ray.

An exemplary light source of light irradiation is a high-pressure mercury vapor lamp.

The cumulative light quantity during light irradiation may be 100 to 3,000 mJ/cm² and is more preferably 100 to 1,500 mJ/cm² for the sake of productivity and curing properties of the coatings.

An embodiment of the method of manufacturing the spectacle lens may be as follows.

A method of manufacturing a spectacle lens including a spectacle lens base, a primer layer, and a hard coat layer composed of a plurality of resin layers, in this order, the method comprising:
a step of forming the primer layer on the spectacle lens base; and
a step of forming the plurality of resin layers by applying compositions in a multilayer manner on the primer layer,
wherein each of the compositions contains an organic compound X selected from the group consisting of a polymerizable compound and a polymer thereof, an inorganic compound Y selected from the group consisting of inorganic oxide particles and silsesquioxane, and a polymerization initiator,
when the compositions contain the polymer, at least a part of the polymer and at least a part of the inorganic compound Y may be bonded together, and
Requirement 1 and Requirement 2 are satisfied.

Requirement 1: a mass ratio A of a content of the inorganic compound Y to a content of the organic compound X varies among the compositions used in formation of the plurality of resin layers and is 0.7 to 5.3, and
the mass ratios A of the compositions separately used in formation of the plurality of resin layers and constituting the plurality of resin layers are in a progressively increasing sequence from a primer layer side to a side opposite of the primer layer side.

Requirement 2: The polymerization initiator contains: a polymerization initiator V with a ratio of a molar absorption coefficient at a wavelength of 254 nm to a molar absorption coefficient at a wavelength of 365 nm being not less than 50; and a polymerization initiator W with a ratio between those molar absorption coefficients being less than 30, and
a mass ratio B of a content of the polymerization initiator V to a content of the polymerization initiator W is 0.2 to 0.8.

### <Method of manufacturing primer layer-forming composition or compositions>

The method of manufacturing the primer layer-forming composition or the compositions may involve mixing various components that may be contained in the primer layer-forming composition or the compositions described above at one time or in separate steps.

### <Method of manufacturing modified inorganic compound Y>

The method of manufacturing the modified inorganic compound Y may be a method in which a polymerizable compound is polymerized by living radical polymerization to bond the obtained polymer to the surface of the inorganic compound Y.

The living radical polymerization may be atom transfer radical polymerization.

Specifically, this may be manufactured by reacting the mixture for living polymerization that contains an inorganic compound Y having a starting moiety on the surface thereof, a polymerizable compound, and a living polymerization catalyst.

As one embodiment of the method of manufacturing the modified inorganic compound Y, a method in which the mixture for living polymerization is reacted to polymerize the polymerizable compound by living radical polymerization and bond the obtained polymer, is detailed below.

### (Mixture for living polymerization)

The mixture for living polymerization preferably contains the inorganic compound Y having a starting moiety on the surface thereof, the polymerizable compound, and the living polymerization catalyst.

### - Inorganic compound Y having starting moiety on its surface -

The mixture for living polymerization may contain the inorganic compound Y having a starting moiety on the surface thereof.

The inorganic compound Y having a starting moiety on the surface thereof refers to an inorganic compound Y having, on the surface thereof, a group that serves as a starting point of living radical polymerization.

The inorganic compound Y is as described above.

The starting moiety is a halogenated organic group, for instance.

The starting moiety is preferably a moiety having a group represented by Formula (S1).

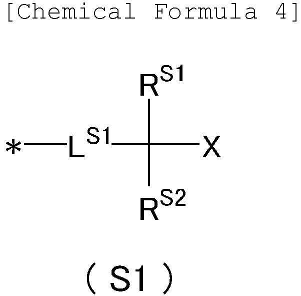

In Formula (S1), * represents a bonding position. X represents a halogen atom. R^{S1} and R^{S2} each independently represent a hydrogen atom or a substituent. L^{S1} represents a divalent linking group.

The substituent is preferably an organic group and more preferably a hydrocarbon group. The substituent preferably has 1 to 20 carbon atoms.

The divalent linking group is for example a divalent linking group represented by Z.

As a method of producing the inorganic compound Y having a starting moiety on the surface thereof, one exemplary method is as follows: an inorganic compound Y having, on its surface, an ethylenically unsaturated group (e.g., (meth)acryloyl group)-containing group is reacted with epihalogenhydrin (e.g., epichlorohydrin) in the presence of aluminum trichloride.

In this case, the content of the inorganic compound Y having an ethylenically unsaturated group-containing group fixed on the surface thereof is preferably 70 to 99.9 mass% with respect to the total content of the inorganic compound Y having an ethylenically unsaturated group-containing group fixed on the surface thereof, aluminum trichloride, and epihalogenhydrin.

The aluminum trichloride content is preferably 0.001 to 5 mass% with respect to the above total content.

The epihalogenhydrin content is preferably 0.05 to 30 mass% with respect to the above total content.

After the reaction for producing the inorganic compound Y having a starting moiety on the surface thereof is carried out using a composition containing the inorganic compound Y having an ethylenically unsaturated group-containing group fixed on the surface thereof, aluminum trichloride, and epihalogenhydrin, this composition having undergone the reaction may be directly used for preparation of the mixture for living polymerization.

The inorganic compound Y having an ethylenically unsaturated group-containing group fixed on the surface thereof may be produced by, for instance, reacting the inorganic compound Y with a silane coupling agent having an ethylenically unsaturated group (e.g., (meth)acryloyl group), or a commercial product may be used.

For the inorganic compound Y having a starting moiety on the surface thereof, one or more types thereof may be used alone or in combination.

When the mixture for living polymerization contains the inorganic compound Y having a starting moiety on the surface thereof, the content of the inorganic compound Y having a starting moiety on the surface thereof is preferably 20 to 99.5 mass% and more preferably 30 to 96 mass% with respect to the total solids of the mixture for living polymerization.

### - Polymerizable compound -

The mixture for living polymerization may contain the polymerizable compound.

The above-described polymerizable compound can be used as the polymerizable compound herein, and a preferred embodiment is also the same.

One or more of the polymerizable compounds may be used alone or in combination.

When the mixture for living polymerization contains the polymerizable compound, the polymerizable compound content is preferably 0.1 to 60 mass% and more preferably 10 to 60 mass% with respect to the total solids of the mixture for living polymerization.

### - Living polymerization catalyst -

The mixture for living polymerization may contain the living polymerization catalyst.

Examples of the living polymerization catalyst include transition metals and transition metal compounds.

Examples of the transition metals as well as transition metals of the transition metal compounds include copper, iron, cobalt, chromium, manganese, molybdenum, silver, zinc, palladium, rhodium, platinum, ruthenium, iridium, ytterbium, samarium, rhenium, and nickel, with preferred being copper, iron, or ruthenium.

The transition metal compound may be a transition metal complex composed of a transition metal as above and a ligand.

The living polymerization catalyst may be an iron compound (e.g., ferrocene).

The iron compound may be a compound represented by Formula (F1) or a compound represented by Formula (F2).

CP¹-Fe-CP² ... (F1)

CP¹-Fe-(R)₃ ... (F2)

In Formula (F1), CP¹ and CP² each independently represent a cyclopentadienyl ring that may have a substituent.

The number of substituents that the cyclopentadienyl ring has is preferably 0 to 5 and more preferably 1.

The substituent that the cyclopentadienyl ring may have may be -P(R^{P})₂.

In "-P(R^{P})₂," P is a phosphorus atom, and two R^{P}'s each independently represent a hydrogen atom or a substituent. The substituent is preferably an organic group and more preferably an alkyl group or a phenyl group. The alkyl group may be linear or branched. The number of carbon atoms in the alkyl group is preferably 1 to 3.

In Formula (F1), "Fe" is an iron atom.

In Formula (F2), CP¹ represents a cyclopentadienyl ring that may have a substituent. Three R's each independently represent -CO, a halogen atom, or -PPh₃.

The definition of CP¹ in Formula (F2) is the same as that in Formula (F1), and a preferred range thereof is also the same.

In "-PPh₃," P is a phosphorus atom, and Ph is a phenyl group that may have a substituent. The substituent is preferably an organic group and more preferably an alkyl group. The alkyl group may be linear or branched. The number of carbon atoms in the alkyl group is preferably 1 to 3. The number of substituents that the phenyl group has is preferably 0 to 5.

In Formula (F2), "Fe" is an iron atom.

The living polymerization catalyst may be copper or a copper compound.

Examples of the copper compound include copper(I) chloride, copper(I) bromide, copper(I) iodide, copper(I) cyanide, copper(I) oxide, and copper(I) perchlorate.

One or more of the living polymerization catalysts may be used alone or in combination.

When the mixture for living polymerization contains the living polymerization catalyst, the living polymerization catalyst content is preferably 0.0001 to 1 mass% and more preferably 0.005 to 0.2 mass% with respect to the total solids of the mixture for living polymerization.

### - Promoter -

The mixture for living polymerization may contain a promoter.

Examples of the promoter include a triazine compound, a benzotriazole compound, and an imidazole compound.

The triazine compound is a compound having at least one triazine ring.

The benzotriazole compound is a compound having at least one benzotriazole ring.

The imidazole compound is a compound having at least one imidazole ring.

For the promoter, a commercial product may be used.

Exemplary promoters include Tinuvin 400, Tinuvin 384-2, and Tinuvin 477 (all manufactured by BASF).

One or more of the promoters may be used alone or in combination.

When the mixture for living polymerization contains the promoter, the promoter content is preferably 0.0001 to 10 mass% and more preferably 0.0001 to 5 mass% with respect to the total solids of the mixture for living polymerization.

When the mixture for living polymerization contains the living polymerization catalyst, the living polymerization catalyst content is preferably 50 to 99.99 mass% and more preferably 80 to 99.99 mass% with respect to the total content of the promoter and the living polymerization catalyst.

### - Solvent -

The mixture for living polymerization may contain a solvent.

Examples of the solvent include ethyl acetate, toluene, acetone, dimethylformamide, ketones, alcohols, and water.

One or more of the solvents may be used alone or in combination.

When the mixture for living polymerization contains the solvent, the solvent content is preferably 20 to 90 mass% and more preferably 20 to 80 mass% with respect to the total mass of the mixture for living polymerization.

The reaction time of the living polymerization may be 1 to 10 hours.

The reaction temperature of the living polymerization may be 25°C to 60°C.

### EXAMPLES

The spectacle lens of the present disclosure is described below in further detail by way of examples and comparative examples; however, the invention should not be construed as being limited to the following examples.

### <Spectacle lens production method 1>

A spectacle lens of Example 1 was produced according to the following production method 1.

### (Formation of primer layer)

### - Preparation of primer layer-forming composition -

To pure water (289 parts by mass), Silwet L-77 (manufactured by Momentive Performance Materials Inc.) (0.2 parts by mass) and DOWSIL L-7604 (manufactured by Dow) (0.2 parts by mass) as surfactants, propylene glycol monomethyl ether (10.6 parts by mass), and an aqueous urethane dispersion (EVAFANOL HA-170, manufactured by Nicca Chemical Co., Ltd.; solid content: 37 mass%) (200 parts by mass) were added and stirred, thereby preparing a primer layer-forming composition having a solid concentration of 14.8 mass%.

### - Formation of primer layer -

A spectacle lens base as described below was dipped in the primer layer-forming composition at 90 mm/min and baked at 90°C for 20 minutes to form a primer layer-bearing spectacle lens base having a primer layer on each side of the spectacle lens base.

When a spectacle lens used in evaluation of heat resistance to be described later was produced, a spectacle lens base with a refractive index of 1.60 (S-0.00D, Nikon Lite 3AS material, manufactured by Nikon-Essilor Co., Ltd.) was used as the spectacle lens base.

When a spectacle lens used in evaluation of adhesion, cracking, and scratch resistance (pencil hardness) to be described later was produced, a spectacle lens base with a refractive index of 1.74 (S-7.00D, manufactured by Nikon-Essilor Co., Ltd.) was used as the spectacle lens base.

### (Formation of hard coat layer)

### - Preparation of compositions -

A composition 1 used in formation of a resin layer 1A that is a constituent of a hard coat layer was prepared.

### - Addition of chloro to silsesquioxane and SiO₂ particles

Acrylic group-coated SiO₂ nanoparticle dispersion liquid (MEK-AC-4130Y) (manufactured by Nissan Chemical Corporation) (212.7 parts by mass), ACSQ-TA100 (manufactured by TOAGOSEI Co., Ltd.) (16.7 parts by mass), 1 mass% AlCl₃ solution (19.0 parts by mass), and epichlorohydrin (manufactured by Tokyo Chemical Industry Co., Ltd.) (2.73 parts by mass) were mixed in this order and stirred at 40°C for 4 hours. The resulting solution was defined as a solution 1. Upon the reaction above, SiO₂ nanoparticles having a chloro group (more specifically, SiO₂ nanoparticles having a group represented by Formula (S1) where X is Cl) and/or silsesquioxane having a chloro group (more specifically, silsesquioxane having a group represented by Formula (S1) where X is Cl) was obtained.

The solid content (nanoparticle content) of MEK-AC-4130Y was 30 mass%.

### - Living radical polymerization

The obtained solution 1 (total parts by mass), NK Oligo UA-122P (manufactured by SHIN-NAKAMURA CHEMICAL Co., Ltd.) (15.2 parts by mass), 1 mass% Fe solution (3.00 parts by mass), and 0.02 mass% MeIm solution (3.00 parts by mass; an effective component: 0.0006 parts by mass) were mixed and stirred at 40°C for 2 hours. The resulting solution was defined as an LRP-SiO₂ solution 1.

A modified inorganic compound Y in which at least part of the inorganic compound Y contained in the solution 1 and at least part of NK Oligo UA-122P were bonded together was obtained through the foregoing procedures.

### -- Preparation of 1 mass% Fe solution

MEK (methyl ethyl ketone; 99.0 parts by mass) and 1,1-bis(di-isopropylphosphino)ferrocene (manufactured by Tokyo Chemical Industry Co., Ltd.; 1.0 parts by mass) were mixed and stirred well. The resulting solution was defined as the 1 mass% Fe solution.

-- MEK (methyl ethyl ketone; 98 parts by mass) and 1-methylimidazole (manufactured by Tokyo Chemical Industry Co., Ltd.) (2 parts by mass) were mixed and stirred well. The resulting mixture was subjected to 10 times dilution twice, and the obtained solution was defined as the 0.02 mass% MeIm solution.

### - Solvent displacement and addition of other components

MEK (75 parts by mass) being a solvent was removed from the obtained LRP-SiO₂ solution A1 (total parts by mass) by use of an evaporator (NE-1101, manufactured by Tokyo Rikakikai Co., Ltd.).

Subsequently, residue was put in a vessel, followed by rinsing a flask with propylene glycol monomethyl ether acetate (PGMEA) three times to thereby further transfer residue remaining in the flask to the vessel. In this process, 113 parts by mass of PGMEA was used in total. A solution in this vessel was stirred well.

### - Addition of other components

To the solution having undergone the solvent displacement, 10 mass% Ominirad 819 solution (1.90 parts by mass) (manufactured by IGM Resins B.V.), 10 mass% Ominirad 127 solution (manufactured by IGM Resins B.V.) (1.50 parts by mass), 50 mass% Tinuvin 400 solution (manufactured by BASF) (2.00 parts by mass), and 10 mass% L7604 solution (1.25 parts by mass) (manufactured by Dow) were added to prepare a composition 1.

Other compositions than the composition 1 were prepared by the same procedures as the composition 1 except that the contents of components vary as shown in the table below.

### - Formation of resin layers -

Onto one of the primer layers of the primer layer-bearing spectacle lens base obtained above, a composition 4 (2.0 mL) was dropped and spin-coated. In the spin coating, the primer layer-bearing spectacle lens base having the composition 4 applied thereon was rotated at 500 rpm for 10 seconds and then at 2000 rpm for 0.5 seconds, and finally the rotation was brought to 0 rpm over 1 second. Subsequently, the resulting base was heated at 100°C for 20 minutes.

Further, a composition 3 was spin-coated onto the coating of the composition 4 by the same procedures as the composition 4 and then heated at 100°C for 20 minutes. A composition 2 and the composition 1 were spin-coated in this order by the same procedures as above. Thus, the coating of the composition 4, the coating of the composition 3, the coating of the composition 2, and the coating of the composition 1 were formed in this order on one of the primer layers of the primer layer-bearing spectacle lens base.

Also on the other of the primer layers of the primer layer-bearing spectacle lens base thus-obtained, the coating of the composition 4, the coating of the composition 3, the coating of the composition 2, and the coating of the composition 1 were formed in this order by the same procedures as above.

Thereafter, the coatings of the compositions on the opposite surfaces of the spectacle lens base were irradiated with UV light (cumulative light quantity: 0.8 J/cm²) using a high-pressure mercury vapor lamp (100 mW/cm²) as a light source and then baked at 100°C for 10 minutes, thereby obtaining a spectacle lens of Example 1 having the primer layer, a resin layer 1D, a resin layer 1C, a resin layer 1B, and a resin layer 1A in this order on each of the opposite surfaces of the spectacle lens base.

### <Examples 2 to 4 and Comparative Examples 1 to 4>

In Examples 2 to 4 and Comparative Examples 1 to 4, respective spectacle lenses were obtained by the same procedures as those for the production method 1 except that the contents of components vary as shown in the table below.

Each numerical value in the table refers to parts by mass of the relevant component in a composition.
- TA-100: silsesquioxane (AC-SQ TA-100, manufactured by Toagosei Co., Ltd.)
- 4130Y: 30 mass% acrylic group-coated SiO₂ nanoparticle dispersion liquid (MEK-AC-4130Y, manufactured by Nissan Chemical Corporation)
- 122P: urethane acrylate (compound represented by Formula (I); NK Oligo UA-122P, manufactured by SHIN-NAKAMURA CHEMICAL Co., Ltd.)
- 232P: urethane acrylate (compound represented by Formula (I); NK Oligo UA-232P, manufactured by SHIN-NAKAMURA CHEMICAL Co., Ltd.)
- Omn127: 10 mass% Ominirad 127 solution (polymerization initiator V, which was confirmed to have a predetermined molar absorption coefficient by measuring its molar absorption coefficient by the above-described method; manufactured by IGM Resins B.V.)
- Omn819: 10 mass% Ominirad 819 (polymerization initiator W, which was confirmed to have a predetermined molar absorption coefficient by measuring its molar absorption coefficient by the above-described method; manufactured by IGM Resins B.V.)
- Tin400: 50 mass% Tinuvin 400 (manufactured by BASF)
- EpiCl: epichlorohydrin (manufactured by Tokyo Chemical Industry Co., Ltd.)
- Fe: 1 mass% Fe solution described above
- AlCl₃: 1 mass% AlCl₃ solution described above
- MeIm: 0.02 mass% MeIm solution described above
- MEK: methyl ethyl ketone
- PGMEA: propylene glycol monomethyl ether acetate
- L7604: 10 mass% L7604 solution (manufactured by Dow)

**[Table 1]**

| | | TA100 | 4130Y | 122P | 232P | Omn127 | Omn819 | Tin400 | EpiCl | AlCl₃ | Fe | MeIm | MEK | PGMEA | L7604 |
|---|---|---|---|---|---|---|---|---|---|---|---|---|---|---|---|
| Composition | 1 | 16.7 | 212.7 | 15.2 | - | 1.50 | 1.90 | 2.00 | 2.73 | 19.0 | 3.00 | 3.00 | 75 | 113 | 1.25 |
| | 2 | 14.0 | 177.6 | 28.9 | - | 1.20 | 2.20 | 2.02 | 2.29 | 16.0 | 2.30 | 2.30 | 55 | 103 | 1.18 |
| | 3 | 11.1 | 143.2 | 42.6 | - | 0.80 | 2.60 | 2.00 | 1.84 | 13.0 | 1.60 | 1.60 | 10 | 124 | 1.33 |
| | 4 | 8.5 | 107.8 | 56.3 | - | 0.50 | 2.90 | 2.02 | 1.41 | 10.0 | 1.00 | 1.00 | 41 | 101 | 1.00 |
| Composition | 5 | 16.7 | 212.7 | 15.2 | - | 0.50 | 2.90 | 2.00 | 2.73 | 19.0 | 3.00 | 3.00 | 66 | 124 | 1.33 |
| | 6 | 14.0 | 177.6 | 28.9 | - | 0.80 | 2.60 | 2.02 | 2.29 | 16.0 | 2.30 | 2.30 | 37 | 124 | 1.33 |
| | 7 | 11.1 | 143.2 | 42.6 | - | 1.20 | 2.20 | 2.00 | 1.84 | 13.0 | 1.60 | 1.60 | 31 | 98 | 1.14 |
| | 8 | 8.5 | 107.8 | 56.3 | - | 1.50 | 1.90 | 2.02 | 1.41 | 10.0 | 1.00 | 1.00 | 41 | 101 | 1.00 |
| Composition | 9 | 16.7 | 212.7 | 15.2 | - | 0.20 | 3.20 | 2.00 | 2.73 | 19.0 | 3.00 | 3.00 | 83 | 103 | 1.18 |
| | 10 | 14.0 | 177.6 | 28.9 | - | 0.80 | 2.60 | 2.02 | 2.29 | 16.0 | 2.30 | 2.30 | 62 | 94 | 1.11 |
| | 11 | 11.1 | 143.2 | 42.6 | - | 2.00 | 1.40 | 2.00 | 1.84 | 13.0 | 1.60 | 1.60 | 31 | 98 | 1.14 |
| | 12 | 8.5 | 107.8 | 56.3 | - | 3.00 | 0.40 | 2.02 | 1.41 | 10.0 | 1.00 | 1.00 | 25 | 138 | 1.21 |
| Composition | 13 | 18.4 | 234.0 | 6.9 | - | 1.50 | 1.90 | 2.00 | 3.00 | 20.9 | 3.00 | 3.00 | 92 | 113 | 1.25 |
| | 14 | 14.0 | 177.6 | 28.9 | - | 1.20 | 2.20 | 2.02 | 2.29 | 16.0 | 2.30 | 2.30 | 42 | 118 | 1.29 |
| | 15 | 11.1 | 143.2 | 42.6 | - | 0.80 | 2.60 | 2.00 | 1.84 | 13.0 | 1.60 | 1.60 | 35 | 94 | 1.11 |
| | 16 | 4.2 | 54.3 | 77.4 | - | 0.50 | 2.90 | 2.02 | 0.70 | 5.0 | 0.50 | 0.50 | 15 | 111 | 0.98 |
| Composition | 17 | 16.7 | 212.7 | - | 15.20 | 1.50 | 1.90 | 2.00 | 2.73 | 19.0 | 3.00 | 3.00 | 75 | 113 | 1.25 |
| | 18 | 14.0 | 177.6 | - | 28.90 | 1.20 | 2.20 | 2.02 | 2.29 | 16.0 | 2.30 | 2.30 | 55 | 103 | 1.18 |
| | 19 | 11.1 | 143.2 | - | 42.60 | 0.80 | 2.60 | 2.00 | 1.84 | 13.0 | 1.60 | 1.60 | 10 | 124 | 1.33 |
| | 20 | 8.5 | 107.8 | - | 56.30 | 0.50 | 2.90 | 2.02 | 1.41 | 10.0 | 1.00 | 1.00 | 41 | 101 | 1.00 |
| Composition | 21 | 16.7 | 212.7 | - | 15.20 | 0.50 | 2.90 | 2.00 | 2.73 | 19.0 | 3.00 | 3.00 | 66 | 124 | 1.33 |
| | 22 | 14.0 | 177.6 | - | 28.90 | 0.80 | 2.60 | 2.02 | 2.29 | 16.0 | 2.30 | 2.30 | 37 | 124 | 1.33 |
| | 23 | 11.1 | 143.2 | - | 42.60 | 1.20 | 2.20 | 2.00 | 1.84 | 13.0 | 1.60 | 1.60 | 31 | 98 | 1.14 |
| | 24 | 8.5 | 107.8 | - | 56.30 | 1.50 | 1.90 | 2.02 | 1.41 | 10.0 | 1.00 | 1.00 | 41 | 101 | 1.00 |
| Composition | 25 | 16.7 | 212.7 | - | 15.20 | 0.20 | 3.20 | 2.00 | 2.73 | 19.0 | 3.00 | 3.00 | 83 | 103 | 1.18 |
| | 26 | 14.0 | 177.6 | - | 28.90 | 0.80 | 2.60 | 2.02 | 2.29 | 16.0 | 2.30 | 2.30 | 62 | 94 | 1.11 |
| | 27 | 11.1 | 143.2 | - | 42.60 | 2.00 | 1.40 | 2.00 | 1.84 | 13.0 | 1.60 | 1.60 | 31 | 98 | 1.14 |
| | 28 | 8.5 | 107.8 | - | 56.30 | 3.00 | 0.40 | 2.02 | 1.41 | 10.0 | 1.00 | 1.00 | 25 | 138 | 1.21 |
| Composition | 29 | 18.4 | 234.0 | - | 6.85 | 1.50 | 1.90 | 2.00 | 3.00 | 20.9 | 3.30 | 3.30 | 92 | 113 | 1.25 |
| | 30 | 14.0 | 177.6 | - | 28.90 | 1.20 | 2.20 | 2.02 | 2.29 | 16.0 | 2.30 | 2.30 | 42 | 118 | 1.29 |
| | 31 | 11.1 | 143.2 | - | 42.60 | 0.80 | 2.60 | 2.00 | 1.84 | 13.0 | 1.60 | 1.60 | 35 | 94 | 1.11 |
| | 32 | 4.2 | 54.3 | - | 77.40 | 0.50 | 2.90 | 2.02 | 0.70 | 5.0 | 0.50 | 0.50 | 15 | 111 | 0.98 |

### <Evaluation>

### (Adhesion)

### - Adhesion between hard coat layer and primer layer -

The adhesion between the hard coat layer and the primer layer (Pri.-HC in the tables below) was evaluated by the cross cut tape test according to JIS K 5600, by the following procedures.

With each of the spectacle lenses produced by the production method 1, a convex surface of the spectacle lens was cut with a knife to reach the spectacle lens base at 1-mm intervals, thus forming 100 squares. Next, Scotch tape (manufactured by 3M) was strongly pressed against the thus-cut hard coat layer and then quickly pulled with a load of 4 kg in a 45° direction relative to the surface on which the tape was applied, so that the tape was peeled off. Thereafter, the number of squares remaining on the primer layer was counted, and the adhesion between the hard coat layer and the primer layer was evaluated according to the following evaluation criteria.
A: The number of remaining squares being 90 or more
B: The number of remaining squares being 89 or less

### - Adhesion between hard coat layer and antireflection layer

The adhesion between the hard coat layer and an antireflection layer (HC-AR in the tables below) was evaluated by the cross cut tape test according to JIS K 5600, by the following procedures.

On each side of each of the spectacle lenses produced by the production method 1, a multilayered inorganic antireflection layer (thickness: 400 nm; components: SiO₂ and ZrO₂) was formed by vacuum vapor deposition (electron beam method) on the surface of the hard coat layer opposite of the spectacle lens base side, thus forming an HC-AR evaluation sample.

With the HC-AR evaluation sample thus obtained, a convex surface of the sample was cut with a knife to reach the spectacle lens base at 1-mm intervals, thus forming 100 squares. Next, Scotch tape (manufactured by 3M) was strongly pressed against the thus-cut antireflection layer and then quickly pulled with a load of 4 kg in a 45° direction relative to the surface on which the tape was applied, so that the tape was peeled off. Thereafter, the number of squares remaining on the hard coat layer was counted, and the adhesion between the hard coat layer and the antireflection layer was evaluated according to the evaluation criteria same as that for the adhesion between the hard coat layer and the primer layer described above.

### (Cracking)

Three spectacle lenses of each example were produced by the production method 1, it was visually checked whether there was cracking in the spectacle lenses, and the number of spectacle lenses having cracking out of the three lenses was evaluated.
A: The number of spectacle lenses having cracking being 0
B: The number of spectacle lenses having cracking being 1 to 3

### (Scratch resistance (pencil hardness))

Using each of the spectacle lenses produced by the production method 1, the pencil hardness of the hard coat layer of the spectacle lens was measured to evaluate the scratch resistance.

A pencil was obliquely pressed into a convex surface of the spectacle lens on the side of the hard coat layer opposite of the primer layer side, and the hardness immediately before the hardness with which a scratch was made was taken as the hardness of the hard coat layer. For instance, when no scratch was made with a 6H pencil but a scratch was made with a 7H pencil, the hardness of the hard coat layer was determined to be 6H.
A: Hardness of 7H or higher
B: Hardness of 6H or lower

### (Heat resistance)

On each side of each of the spectacle lenses produced by the production method 1, a multilayered inorganic antireflection layer (thickness: 400 nm; components: SiO₂ and ZrO₂) was formed by vacuum vapor deposition (electron beam method) on the surface of the hard coat layer opposite of the primer layer side, thus forming a heat resistance evaluation sample.

The obtained heat resistance evaluation sample was put in an oven, heated at 60°C for 1 hour, then taken out from the oven, and allowed to cool to room temperature. After being allowed to cool, the resulting sample was visually observed. The heating temperature was increased in increments of 10°C and the sample was heated at each heating temperature for 1 hour until a crack became larger or a new crack was generated in the heated sample in comparison to the sample before being heated (i.e., the sample before being put in the oven). The above operation was repeated, and when a crack became larger or a new crack was generated in the heated sample in comparison to the sample before being heated, a heating temperature immediately before that heating temperature was taken as the heat resistance temperature and evaluated according to the following evaluation criteria. For instance, when a crack became larger or a new crack was generated after heating at 70°C for 1 hour following to heating at 60°C for 1 hour, the heat resistance temperature was determined to be 60°C.
A: Heat resistance temperature of 90°C or higher
B: Heat resistance temperature of 80°C or lower

The meanings of the descriptions in the tables are as follows.

Each numerical value in Tables 2 and 3 refers to a solid of the relevant component in a composition.

The "mass ratio A (Y/X)" column shows the mass ratio A of the inorganic compound Y content to the organic compound X content.

The "mass ratio B (V/W)" column shows the mass ratio B of the polymerization initiator V content to the polymerization initiator W content.

The "film thickness (µm)" column shows the thickness of the hard coat layer (total thickness of the resin layers). The thickness was measured by the method described above.

The term "balance" of the "Fe" column refers to 100 - (total solids of those components other than Fe shown in the tables).

The "structure" space shows the arrangement of the respective resin layers in the relevant hard coat layer. For example, "primer side 1D -> 1C -> 1B -> 1A" refers to a hard coat layer having, on or above the primer layer, the resin layer 1D, the resin layer 1C, the resin layer 1B, and the resin layer 1A in this order.

Each parenthesized numerical value in the "adhesion" refers to the number of remaining squares/100 squares.

**[Table 2]**

| | Resin layer | Composition (mass%) | | | | | | | | | | Mass ratio A (Y/X) | Mass ratio B (V/W) | Film thickness (µm) | Adhesion | | Cracking | Scratch resistance (HC) | Heat resistance (°C) |
|---|---|---|---|---|---|---|---|---|---|---|---|---|---|---|---|---|---|---|---|
| | | Type | Y | | X | v | W | - | - | - | - | | | | | | | | |
| | | | TA100 | 4130Y | 122P | Omn127 | Omn819 | Tin400 | EpiCl | AlCl₃ | Fe | | | | Pri.-HC | HC-AR | Pri.-HC | | |
| Example 1 | Structure | Primer side 1D → 1C → 1B → 1A | | | | | | | | | | - | - | 13.4 | A (100/100) | A (100/100) | A | A (8H) | A (100) |
| | Resin layer 1A | 1 | 16.7 | 63.8 | 15.2 | 0.15 | 0.19 | 1.0 | 2.73 | 0.19 | Balance | 5.3 | 0.8 | | | | | | |
| | Resin layer 1B | 2 | 14.0 | 53.3 | 28.9 | 0.12 | 0.22 | 1.0 | 2.29 | 0.16 | Balance | 2.3 | 0.5 | | | | | | |
| | Resin layer 1C | 3 | 11.1 | 43.0 | 42.6 | 0.08 | 0.26 | 1.0 | 1.84 | 0.13 | Balance | 1.3 | 0.3 | | | | | | |
| | Resin layer 1D | 4 | 8.5 | 32.3 | 56.3 | 0.05 | 0.29 | 1.0 | 1.41 | 0.10 | Balance | 0.7 | 0.2 | | | | | | |
| Example 2 | Structure | Primer side 2D → 2C → 2B → 2A | | | | | | | | | | - | - | 15.2 | A (100/100) | A (100/100) | A | A (7H) | A (90) |
| | Resin layer 2A | 5 | 16.7 | 63.8 | 15.2 | 0.05 | 0.29 | 1.0 | 2.73 | 0.19 | Balance | 5.3 | 0.2 | | | | | | |
| | Resin layer 2B | 6 | 14.0 | 53.3 | 28.9 | 0.08 | 0.26 | 1.0 | 2.29 | 0.16 | Balance | 2.3 | 0.3 | | | | | | |
| | Resin layer 2C | 7 | 11.1 | 43.0 | 42.6 | 0.12 | 0.22 | 1.0 | 1.84 | 0.13 | Balance | 1.3 | 0.5 | | | | | | |
| | Resin layer 2D | 8 | 8.5 | 32.3 | 56.3 | 0.15 | 0.19 | 1.0 | 1.41 | 0.10 | Balance | 0.7 | 0.8 | | | | | | |
| Comparative Example 1 | Structure | Primer side 1d → 1c → 1b → 1a | | | | | | | | | | - | - | 14.7 | A (100/100) | A (100/100) | A | B (6H) | B (80) |
| | Resin layer 1a | 9 | 16.7 | 63.8 | 15.2 | 0.02 | 0.32 | 1.0 | 2.73 | 0.19 | Balance | 5.3 | 0.1 | | | | | | |
| | Resin layer 1b | 10 | 14.0 | 53.3 | 28.9 | 0.08 | 0.26 | 1.0 | 2.29 | 0.16 | Balance | 2.3 | 0.3 | | | | | | |
| | Resin layer 1c | 11 | 11.1 | 43.0 | 42.6 | 0.20 | 0.14 | 1.0 | 1.84 | 0.13 | Balance | 1.3 | 1.4 | | | | | | |
| | Resin layer 1d | 12 | 8.5 | 32.3 | 56.3 | 0.30 | 0.04 | 1.0 | 1.41 | 0.10 | Balance | 0.7 | 7.5 | | | | | | |
| Comparative Example 2 | Structure | Primer side 2d → 2c → 2b → 2a | | | | | | | | | | - | - | 13.5 | A (100/100) | A (97/100) | B | A (8H) | A (90) |
| | Resin layer 2a | 13 | 18.4 | 70.2 | 6.9 | 0.15 | 0.19 | 1.0 | 3.00 | 0.21 | Balance | 12.9 | 0.8 | | | | | | |
| | Resin layer 2b | 14 | 14.0 | 53.3 | 28.9 | 0.12 | 0.22 | 1.0 | 2.29 | 0.16 | Balance | 2.3 | 0.5 | | | | | | |
| | Resin layer 2c | 15 | 11.1 | 43.0 | 42.6 | 0.08 | 0.26 | 1.0 | 1.84 | 0.13 | Balance | 1.3 | 0.3 | | | | | | |
| | Resin layer 2d | 16 | 4.2 | 16.3 | 77.4 | 0.05 | 0.29 | 1.0 | 0.70 | 0.05 | Balance | 0.3 | 0.2 | | | | | | |

**[Table 3]**

| | Resin layer | Composition (mass%) | | | | | | | | | | Mass ratio A (Y/X) | Mass ratio B (V/W) | Film thickness (µm) | Adhesion | | Cracking | Scratch resistance (HC) | Heat resistance (°C) |
|---|---|---|---|---|---|---|---|---|---|---|---|---|---|---|---|---|---|---|---|
| | | Type | Y | | X | v | W | - | - | - | - | | | | | | | | |
| | | | TA100 | 4130Y | 232P | Omn127 | Omn819 | Tin400 | EpiCl | AlCl₃ | Fe | | | | Pri.-HC | HC-AR | Pri.-HC | | |
| Example 3 | Structure | Primer side 3D → 3C → 3B → 3A | | | | | | | | | | - | - | 14.2 | A (100/100) | A (100/100) | A | A (8H) | A (100) |
| | Resin layer 3A | 17 | 16.7 | 63.8 | 15.2 | 0.15 | 0.19 | 1.0 | 2.73 | 0.19 | Balance | 5.3 | 0.8 | | | | | | |
| | Resin layer 3B | 18 | 14.0 | 53.3 | 28.9 | 0.12 | 0.22 | 1.0 | 2.29 | 0.16 | Balance | 2.3 | 0.5 | | | | | | |
| | Resin layer 3C | 19 | 11.1 | 43.0 | 42.6 | 0.08 | 0.26 | 1.0 | 1.84 | 0.13 | Balance | 1.3 | 0.3 | | | | | | |
| | Resin layer 3D | 20 | 8.5 | 32.3 | 56.3 | 0.05 | 0.29 | 1.0 | 1.41 | 0.10 | Balance | 0.7 | 0.2 | | | | | | |
| Example 4 | Structure | Primer side 4D → 4C → 4B → 4A | | | | | | | | | | - | - | 14.4 | A (100/100) | A (100/100) | A | A (8H) | A (100) |
| | Resin layer 4A | 21 | 16.7 | 63.8 | 15.2 | 0.05 | 0.29 | 1.0 | 2.73 | 0.19 | Balance | 5.3 | 0.2 | | | | | | |
| | Resin layer 4B | 22 | 14.0 | 53.3 | 28.9 | 0.08 | 0.26 | 1.0 | 2.29 | 0.16 | Balance | 2.3 | 0.3 | | | | | | |
| | Resin layer 4C | 23 | 11.1 | 43.0 | 42.6 | 0.12 | 0.22 | 1.0 | 1.84 | 0.13 | Balance | 1.3 | 0.5 | | | | | | |
| | Resin layer 4D | 24 | 8.5 | 32.3 | 56.3 | 0.15 | 0.19 | 1.0 | 1.41 | 0.10 | Balance | 0.7 | 0.8 | | | | | | |
| Comparative Example 3 | Structure | Primer side 3d → 3c → 3b → 3a | | | | | | | | | | - | - | 13.4 | A (100/100) | A (100/100) | A | B (6H) | A (100) |
| | Resin layer 3a | 25 | 16.7 | 63.8 | 15.2 | 0.02 | 0.32 | 1.0 | 2.73 | 0.19 | Balance | 5.3 | 0.1 | | | | | | |
| | Resin layer 3b | 26 | 14.0 | 53.3 | 28.9 | 0.08 | 0.26 | 1.0 | 2.29 | 0.16 | Balance | 2.3 | 0.3 | | | | | | |
| | Resin layer 3c | 27 | 11.1 | 43.0 | 42.6 | 0.20 | 0.14 | 1.0 | 1.84 | 0.13 | Balance | 1.3 | 1.4 | | | | | | |
| | Resin layer 3d | 28 | 8.5 | 32.3 | 56.3 | 0.30 | 0.04 | 1.0 | 1.41 | 0.10 | Balance | 0.7 | 7.5 | | | | | | |
| Comparative Example 4 | Structure | Primer side 4d → 4c → 4b → 4a | | | | | | | | | | - | - | 13.7 | A (100/100) | A (93/100) | B | A (8H) | A (100) |
| | Resin layer 4a | 29 | 18.4 | 70.2 | 6.9 | 0.15 | 0.19 | 1.0 | 3.00 | 0.21 | Balance | 12.9 | 0.8 | | | | | | |
| | Resin layer 4b | 30 | 14.0 | 53.3 | 28.9 | 0.12 | 0.22 | 1.0 | 2.29 | 0.16 | Balance | 2.3 | 0.5 | | | | | | |
| | Resin layer 4c | 31 | 11.1 | 43.0 | 42.6 | 0.08 | 0.26 | 1.0 | 1.84 | 0.13 | Balance | 1.3 | 0.3 | | | | | | |
| | Resin layer 4d | 32 | 4.2 | 16.3 | 77.4 | 0.05 | 0.29 | 1.0 | 0.70 | 0.05 | Balance | 0.3 | 0.2 | | | | | | |

Table 1 confirms that the spectacle lens of the present disclosure has desired effects.

### REFERENCE SIGNS LIST

- 10: spectacle lens
- 12: spectacle lens base
- 14: primer layer
- 16: hard coat layer

## Claims

1. A spectacle lens comprising a spectacle lens base, a primer layer, and a hard coat layer in this order,
wherein the hard coat layer is composed of a plurality of resin layers formed by applying compositions in a multilayer manner,
each of the compositions contains an organic compound X selected from the group consisting of a polymerizable compound and a polymer thereof, an inorganic compound Y selected from the group consisting of inorganic oxide particles and silsesquioxane, and a polymerization initiator,
when the compositions contain the polymer, at least a part of the polymer and at least a part of the inorganic compound Y may be bonded together, and
Requirement 1 and Requirement 2 are satisfied,
Requirement 1: a mass ratio A of a content of the inorganic compound Y to a content of the organic compound X varies among the compositions used in formation of the plurality of resin layers and is 0.7 to 5.3, and
the mass ratios A of the compositions separately used in formation of respective resin layers constituting the plurality of resin layers are in a progressively increasing sequence from a primer layer side to a side opposite of the primer layer side,
Requirement 2: the polymerization initiator contains a polymerization initiator V with a ratio of a molar absorption coefficient at a wavelength of 254 nm to a molar absorption coefficient at a wavelength of 365 nm being not less than 50, and a polymerization initiator W with a ratio between those molar absorption coefficients being less than 30, and
a mass ratio B of a content of the polymerization initiator V to a content of the polymerization initiator W is 0.2 to 0.8.

2. The spectacle lens according to claim 1,
wherein the inorganic oxide particles contain one or more selected from the group consisting of SiO₂, Al₂O₃, SnO₂, ZrO₂, and TiO₂.

3. The spectacle lens according to claim 1 or 2, further comprising an antireflection layer on or above the hard coat layer.
